# EUROPEAN PATENT APPLICATION

(11) **EP 1 780 910 A1**
(43) Date of publication of application: **02.05.2007**
(21) Application number: 05292303.4
(22) Date of filing: 27.10.2005
(51) Int. Cl.: H04B 7/26, H04L 1/00, H04L 1/18, H04Q 7/38, H04Q 7/14

(54) **Method of identifying repeating messages, and corresponding wireless communication arrangement**

(71) Applicant: MOTOROLA, INC., Schaumburg, IL 60196 (US)
(72) Inventor: Peyrusse, Olivier, Toulouse 31400 (FR)
(74) Representative: Cross, Rupert Edward Blount

(57) **Abstract**

A method of identifying repeating messages received by a wireless communication arrangement (31) comprises receiving first and second messages at the wireless communication arrangement (31). At least one of the first and second messages comprises at least one identifier bit having a first value or a second value for indicating whether the first and second messages are the same message or different messages. The method further comprises identifying whether the first and second messages are the same message or different messages in dependence on the value of the at least one identifier bit.

## Description

### Field of the Invention

This invention relates to a method of identifying repeating messages received by a wireless communication arrangement, a wireless communication arrangement and a method of updating a radio link timeout counter in a wireless communication arrangement.

### Background of the Invention

Wireless communication systems, for example cellular telephone or private mobile radio (PMR) communication systems, typically provide for radio communication links to be arranged between a network comprising a plurality of base stations (BSs) and a plurality of communication devices, often termed mobile stations (MSs). The MS may be a portable or mobile telephone, a Personal Digital Assistant (PDA), a wireless video or multimedia device, a portable computer, or the like.

Currently, the most ubiquitous cellular communication system is the 2nd generation communication system known as the Global System for Mobile communication (GSM). A number of enhancements and additions have been introduced to the GSM communication system with one such enhancement being the General Packet Radio System (GPRS). The GPRS system has been standardised as an add-on to an existing GSM communication system. Another such enhancement to the GSM communication system is the Enhanced Data rates for GSM Evolution system, which is more commonly known as the EDGE system. A radio access network known as a GERAN (GSM/EDGE Radio Access Network) has been standardised. The GERAN allows for traditional GSM services to be provided as well as the enhanced services and performance provided by EDGE and GPRS.

In a GSM cellular system such as GERAN, traffic information, such as speech, video, SMS, etc and control information for controlling signalling between the MS and BS is communicated between a MS and a BS via radio frequency channels. Traffic messages are transmitted on traffic channels (TCH) and control messages are transmitted normally on control channels, such as Common Control Channel (CCCH), Broadcast Control Channel (BCCH), Slow Associated Control Channel (SACCH). The traffic and control messages are each arranged as multi-frame messages comprising a fixed number of frames, each of the frames comprising a number of time slots.

The SACCH channel is a stand-alone control channel and is associated with a traffic channel. The SACCH carries messages comprising general information between the MS and the BS. For example, on a downlink (i.e. a communication link from a BS to a MS), the SACCH is responsible for conveying slowly but regularly changing information such as transmit power level instructions and specific timing advance instructions to the MS.

A Fast Associated Control Channel (FACCH) channel carries urgent messages, for example to command a handover between cells and makes use of a traffic channel TCH itself. A receiver in the communication system distinguishes a traffic channel TCH carrying traffic and a traffic channel carrying FACCH messages by means of bits transmitted in bursts carrying the traffic channel. These bits are called stealing flags.

During a call established between a MS and a BS over a radio communication link, the call quality is continuously monitored. When the call quality deteriorates below a predetermined threshold, radio link failure or radio link timeout is declared and the call is dropped.

GSM codes speech such that a cyclic redundancy code CRC is added to each frame of the coded speech. When a receiver, for example in the MS, decodes the frame, it verifies the CRC. If the CRC check fails, the frame is erased and not passed to the vocoder for speech decoding. The rate at which frames are erased is known as the Frame Erasure Rate FER and is used by the receiver to detect bad frames. FER is also used to detect bad frames for SACCH messages. With SACCH frames 40 bits are used for the CRC such that probability of detecting bad frames accurately is high.

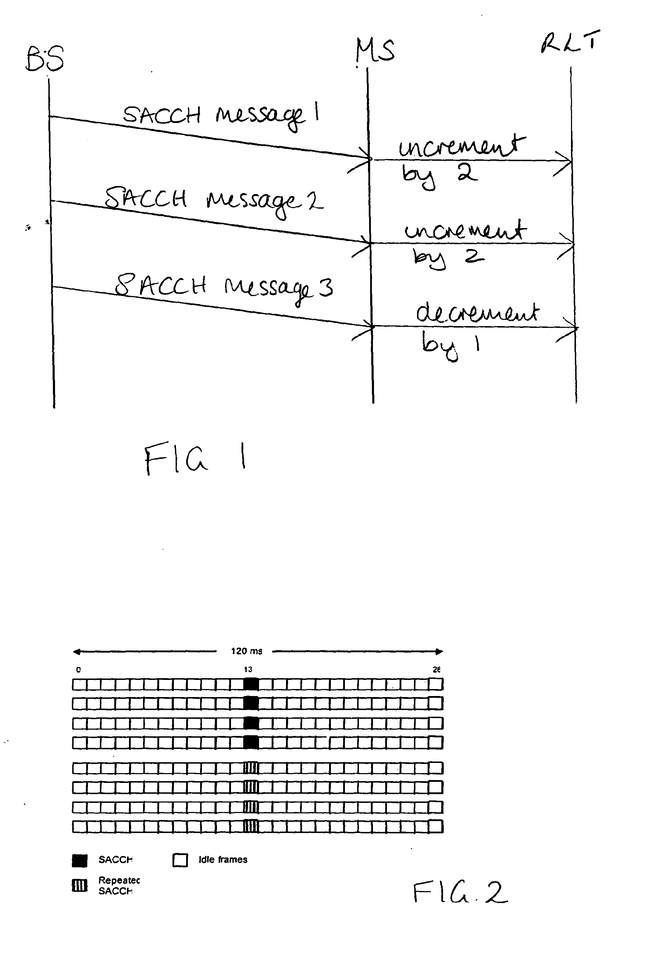

A Radio Link Timeout RLT counter is used to measure radio link timeout. When the RLT counter times out, radio link failure or radio link timeout is declared and the call is dropped. The value of the RLT counter is set by the network and the value is in units of SACCH messages. If the receiver is not able to decode a SACCH message, i.e. the SACCH message comprises bad frames, then this counter decrements by 1. If the decoding is successful, then it is incremented by 2. When the RLT counter reaches 0, the receiver will declare radio link failure, and consider the call as dropped. An example of how the RLT counter is incremented and decremented on a downlink is shown in FIG. 1.

In FIG. 1, SACCH messages 1 and 2 are correctly decoded so the RLT counter is incremented by 2 for each of these messages but SACCH message 3 is not decoded and detected as a bad message so that the RLT counter is decremented by 1. The FER for SACCH messages is an indication of the value of the RLT counter.

In order to keep the impact of dropped calls on a user of the communication device to a minimum, it is desirable to ensure that the call quality is maintained above the predetermined threshold. This can be achieved by improving the coding and/or decoding of the traffic and control signals.

Adaptive Multi-Rate AMR vocoders have been developed which improve the performance of decoding the speech on the traffic channels but has no affect on the decoding of the control messages. Thus, in a call where the speech quality is good, the call may still be dropped due to poor decoding of the control messages.

In order to improve the decoding of the SACCH messages, it has been proposed to use a serial SACCH solution in which SACCH frames are repeated. FIG. 2 is a schematic representation of a SACCH message that is repeated. As defined in the GERAN specification, a SACCH message block comprises four SACCH bursts or frames. One SACCH burst is sent every 26 frames (TCH multiframe), and thus, it takes 104 frames duration, which is 480ms, to transmit a SACCH message. The repetition of SACCH messages can be applied to both downlink and uplink (i.e. communication link from the MS to the BS). The decision as to whether serial SACCH is activated is made by the network and this may be in response to a request from the MS. In addition, serial SACCH can be enabled or disabled during a call depending on radio conditions.

As SACCH messages are repeated, it is possible to combine the repeated SACCH messages with the serial SACCH solution, with the result that the decoding performance is improved. The gain obtained by using the serial SACCH solution compared to a single SACCH is about 4dB.

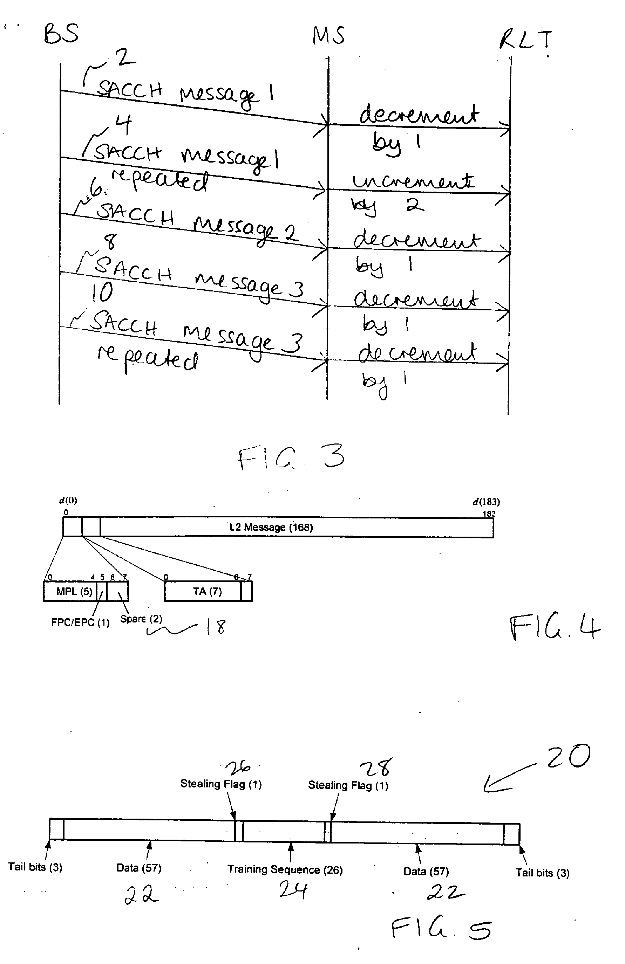

When serial SACCH is activated, the RLT will be updated as described above. However, when a SACCH message cannot be decoded, the receiving device (e.g. the MS) is not aware of whether or not the same SACCH messages has been sent twice and one of them has been detected as a bad message or if the two consecutive SACCH messages are different messages. The standardisation of serial SACCH is in the process of being finalised. FIG. 3 illustrates how the RLT counter in a MS may be updated in the situation when serial SACCH is activated on the downlink and the receiving device does not know whether a SACCH message has been repeated or not.

SACCH messages 2, 6, 8, 10 are not decoded and detected as bad messages such that the RLT counter is decremented by 1 for each of these received messages. SACCH message 4, which is a repeat of SACCH message 2, is decoded and so the RLT counter is incremented by 2. So for the same SACCH message repeated as SACCH messages 2 and 4, the overall affect on the RLT counter is a total incrementation of 1 even though one of the repeated SACCH messages was decoded properly. Furthermore, for the same SACCH message repeated as SACCH messages 8 and 10, the overall affect on the RLT counter is a total decrementation of 2, rather than 1 if the bad SACCH message had not been repeated. Since radio link failure is declared and a call dropped when the value of the RLT counter is zero, the updating of the RLT counter is not optimised when used with serial SACCH. In other words, since the RLT counter is updated based on the decoding of the SACCH messages, having repeating SACCH messages when serial. SACCH is used does not result in an efficient management of the RLT counter and hence a decrease in the number of dropped calls.

### Summary of the Invention

In accordance with the present invention there is provided a method of identifying repeating messages as claimed in claim 1 of the accompanying claims.

In accordance with another aspect of the present invention there is provided a method of updating a radio link timeout counter in a wireless communication arrangement as claimed in claim 8 of the accompanying claims.

In accordance with another aspect of the present invention there is provided a wireless communication arrangement as claimed in claims 12 or 13 of the accompanying claims.

### Brief Description of the Drawings

A method of identifying repeating messages in accordance with the present invention, a method of updating a radio link timeout counter in a wireless communication arrangement in accordance with the present invention and a wireless communication arrangement in accordance with the present invention will now be described, by way of example only, with reference to the accompanying drawings in which:
FIG. 1 is a schematic diagram showing the flow of SACCH messages transmitted on a downlink and how the RLT counter is updated for each SACCH message;
FIG. 2 is a schematic diagram providing a representation of a SACCH message which is repeated when the serial SACCH solution is activated;
FIG. 3 is a schematic diagram showing the flow of SACCH messages transmitted on a downlink and how the RLT counter is updated for each SACCH message when the serial SACCH solution is activated;
FIG. 4 is a diagrammatic representation of a mapping of downlink SACCH content onto a 184 bit payload;
FIG. 5 is a diagrammatic representation of the structure of a SACCH burst;
FIG. 6 is a block schematic diagram of a wireless communication arrangement in accordance with the present invention;
FIG. 7 is a schematic diagram showing the flow of SACCH messages transmitted on a downlink and how the RLT counter is updated in accordance with the present invention for each SACCH message when the serial SACCH solution is activated; and
FIG. 8 is a graph showing the simulation results for the Carrier/Interference C/I ratio for different FERs as a measure of decoding performance.

### Detailed Description of the Drawings

The present invention will be described with reference to a GERAN system, but it will be appreciated that the present invention may apply to any wireless communication system e.g. PMR, GSM, EDGE, GPRS, Universal Mobile Telecommunication System (UMTS) or the like.

In order to reduce the number of dropped calls by using serial SACCH whilst optimising the management of the RLT counter when receiving repeated SACCH messages, the inventors have recognised the need to identify whether a received SACCH message was a repeat or not such that, for example, repeated SACCH messages can be considered as one message when both have been badly decoded.

The present invention provides a method of identifying repeating messages received by a wireless communication arrangement (e.g a Mobile Station (MS) in a downlink or a Base Station System (BSS) in an uplink) by using at least one identifier bit in a received message to indicate whether another received message is the same message or a different message. The at least one identifier bit may have a first value, such as '0', to indicate when the received messages are the same and a second different value, such as '1', to indicate when the received messages are different. The wireless communication arrangement may then identify whether the received messages are the same message or different messages in dependence on the value of the at least one identifier bit.

Thus, by using at least one identifier bit to indicate whether a message is a repeated message or not, the present invention provides a simple way for a wireless communications arrangement to identify repeated messages.

The present invention will be described with reference to repeating SACCH messages but it will be appreciated that the present invention may be used with other types of messages that repeat. For example, the present invention may be used to identify whether traffic messages or other types of control messages are repeated or not. In particular, the present invention may be used advantageously for wireless communication arrangements which receive repeated messages and an action is taken by the arrangement in dependence on whether the messages are decoded or not.

Thus, the present invention allows for repeating SACCH messages to be identified when serial SACCH is activated which allows for the wireless communication arrangement to consider the repeating SACCH messages as a single message, particularly when the repeated SACCH messages are badly decoded.

Referring now to FIG. 4 which is a diagrammatic representation of a downlink SACCH content mapped onto 184 bit payload according to the GERAN Specification (see Section 7.10 of 3GPP TS 44.004). As designated by reference numeral 18, there are currently two spare bits: bit(6) and bit(7). The 184 bits of SACCH content are encoded. After encoding, the length of the message is 456 bits which bits are interleaved to add protection but without changing the initial number of bits. Then the 456 bits of SACCH data are mapped onto four bursts such that a SACCH message comprises four burst of 114 bits of SACCH data.

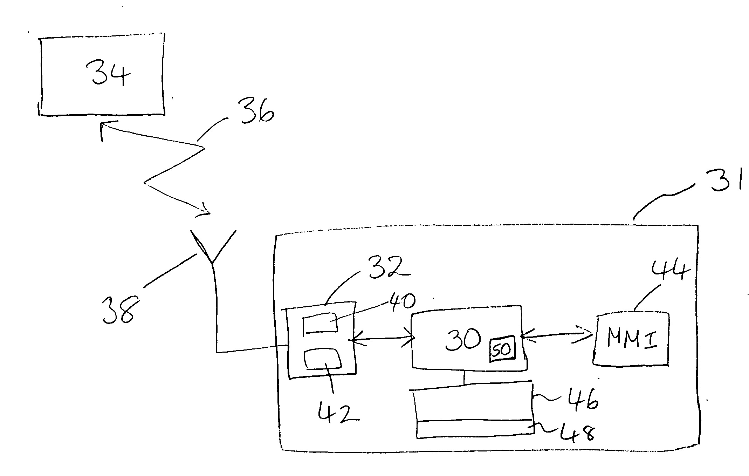

The structure of a SACCH burst 20 or SACCH frame as specified in the GERAN specification (see Section 5.2 of 3GPP TS 45.001) is shown in FIG. 5. Each SACCH burst 20 contains one hundred and fourteen bits of SACCH data separated into two sections of 57 data bits 22 on each side of a training sequence 24. Two bits 26, 28 are inserted on each side of the training sequence 24 between the data bits 22 and the training sequence 24. These bits are the stealing flags (SF) whose purpose is to distinguish a traffic message from a FACCH message as described above. The burst structure shown in FIG. 5 is common to TCH, FACCH, SACCH, Stand-alone Dedicated Control Channel (SDCCH) channels.

A SACCH message in accordance with the invention comprises one or more identifier bits to indicate whether the SACCH message is repeated or not. One or both of the spare bits 18 may be used as the one or more identifier bits.

In an alternative embodiment one or both of the stealing flags 26, 28 may be used as the one or more identifier bits. In this alternative embodiment, for a SACCH message comprising four bursts, the SACCH message will comprise 4 or 8 identifier bits depending on whether one or both stealing flags 26, 28 are used as the identifier bits. The use of stealing flags 26, 28 as identifier bit(s) provides a more robust solution compared to using the spare bits since with the stealing flags there are more bits to carry the same identification information which is useful when a SACCH message is badly decoded.

In an embodiment of the invention, both stealing flags 26 and 28 are used as the identification bits and both stealing flags are set to a value '0' when the SACCH message succeeding is the repetition of this SACCH message and a different value '1' when the SACCH message succeeding is a different SACCH message. Thus, for example when the stealing flags of one SACCH message is set to '0' which indicates the succeeding SACCH message is a repeat message, the stealing flag of the succeeding repeat SACCH message is set to '1'.

An embodiment of the invention will be described further with reference to a wireless communication arrangement receiving SACCH messages and identifying repeating SACCH messages so as to improve the management of the RLT counter. The wireless communication arrangement may be a Base Station System (BSS) comprising a Base Station (BS) and a Base Station Controller (BSC) or a mobile station MS, which may be a portable or mobile telephone, a Personal Digital Assistant (PDA), a wireless video or multimedia device, a portable computer, or the like. In the following description, reference is made to a wireless communication arrangement comprising a MS.

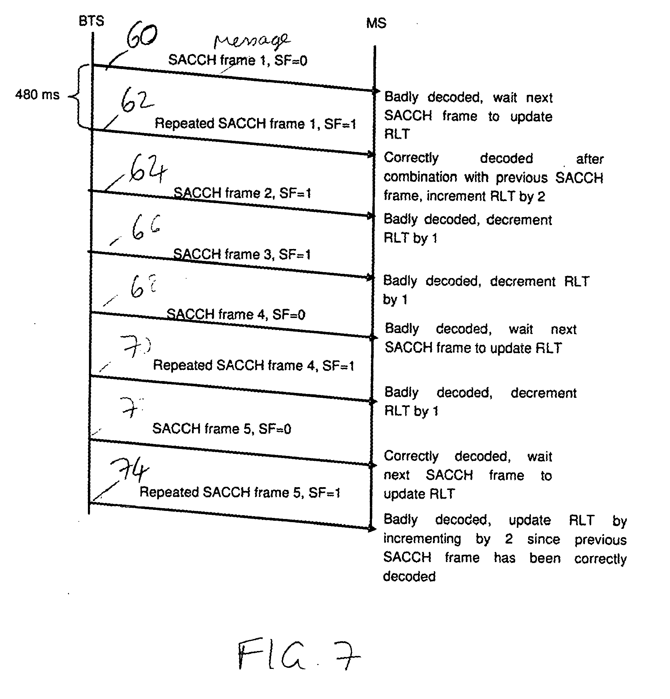

A diagram of the main functional components of an exemplary MS 31 in accordance with the present invention is shown in FIG. 6. As will be apparent to a skilled person, only those functional components of the MS 31 that are necessary for an understanding of the invention have been shown and will be described.

The MS 31 comprises a processor 30 for carrying out operational processing for the MS. The MS 31 also has a communication section 32 for providing wireless communication with a remote base station 34 via a radio communication link 36 which in turn is connected to a network (not shown) for providing communication services to the MS 31. The communication section 32 typically includes an antenna 38, a modulation/demodulation section 40, and a coding/decoding section 42, for example, as will be known to a skilled person and thus will not be described further herein. The communication section 32 is coupled to the processor 30.

The MS 31 also has a Man Machine Interface MMI 44, including elements such as a key pad, microphone, speaker, display screen, for providing an interface between the MS and the user of the MS. The MMI 44 is also coupled to the processor 30.

The MS 31 further comprises a RLT counter 50 which may be part of the coder/decoder 42 or the processor 30 or some other part of the MS 31. In the embodiment described with reference to FIG. 6, the RLT counter 50 is implemented in the processor 30.

The MS 31 also has a program memory 46 in which is stored a program containing processor instructions for operation of the MS 31. The program may contain a number of different program elements or sub-routines containing processor instructions for a variety of different tasks, for example: for exchanging signals with the base station to establish a communication, for sending or receiving speech, text, multimedia or other data, for communicating with the user via the MMI 44. Specifically, a RLT counter update program element 48 is provided in accordance with the described embodiment. The operation of the RLT counter update program element 48 will be described below.

The RLT counter 50 may be implemented by means of a RLT counter program (not shown) which may be stored in program memory 46 and executed by the processor 30. In such an embodiment, the RLT counter update program element 48 would be a sub-routine of the RLT counter program.

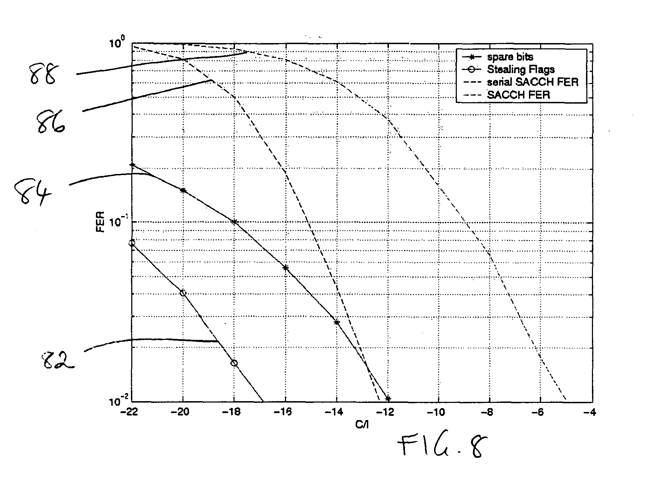

FIG. 7 shows schematically the flow of SACCH messages transmitted on a downlink and how the RLT counter 50 in the MS 31 is updated for each SACCH message in accordance with the present invention.

SACCH message 60, with stealing flags SF set to '0', is received at the communication section 32 of MS 31 and an attempt is made to decode the SACCH message by coding/decoding section 42. In this case, SACCH message 60 is detected as a badly decoded message by a CRC check in the coding/decoding section 42. From the SFs of SACCH message 60, the MS 31 identifies in the coding/decoding section 42, or another part of the MS 31, that the SACCH message 60 is going to be repeated in the succeeding SACCH message and the processor 30 is instructed via a message from the coding/decoding section 42 to wait until the succeeding SACCH message to update the RLT counter 50 under the control of the RLT counter update program element 48.

SACCH message 62, with stealing flags SF set to '1', is then received at the communication section 32 and an attempt is made to decode the SACCH message by coding/decoding section 42. In this case, SACCH message 62 is decoded correctly by coding/decoding section 42 as determined by a CRC check. From the stealing flags of SACCH message 60, it is known that SACCH message 62 is a repeat of SACCH message 60. The MS 31 uses this information to combine and treat the received SACCH messages 60 and 62 as one single message. The MS 31 then updates the RLT counter 50 for one decoded SACCH message by incrementing the RLT counter 50 by 2 under the control of the RLT counter update program element 48.

SACCH message 64, with stealing flags SF set to '1', is received at the communication section 32 of MS 31 and an attempt is made to decode the SACCH message by coding/decoding section 42. In this case, SACCH message 64 is detected as a badly decoded message by a CRC check in the coding/decoding section 42. From the SFs of SACCH message 64, the MS 31 identifies that the SACCH message 64 is not going to be repeated in the succeeding SACCH message. Since the SACCH message 64 is determined to be badly decoded (i.e. a bad message) and from the SF is identified as not a repeating message, the MS 31 updates the RLT counter 50 by decrementing the RLT counter 50 by 1 under the control of the RLT counter update program element 48.

SACCH message 66, with stealing flags SF set to '1', is received at the communication section 32 of MS 31 and an attempt is made to decode the SACCH message by coding/decoding section 42. In this case, SACCH message 66 is detected as a badly decoded message by a CRC check in the coding/decoding section 42. From the SFs of SACCH message 66, the MS 31 identifies that the SACCH message 66 is not going to be repeated in the succeeding SACCH message. Since the SACCH message 66 is determined to be badly decoded and from the SF is identified as not a repeating message, the MS 31 updates the RLT counter 50 by decrementing the RLT counter 50 by 1 under the control of the RLT counter update program element 48.

SACCH message 68, with stealing flags SF set to '0', is received at the communication section 32 of MS 31 and an attempt is made to decode the SACCH message by coding/decoding section 42. In this case, SACCH message 68 is detected as a badly decoded message by a CRC check in the coding/decoding section 42. From the SFs of SACCH message 68, the MS 31 identifies that the SACCH message 68 is going to be repeated in the succeeding SACCH message. The processor 30 is therefore instructed to wait until the succeeding SACCH message to update the RLT counter 50.

SACCH message 70, with stealing flags SF set to '1', is then received at the communication section 32 and an attempt is made to decode the SACCH message by coding/decoding section 42. In this case, SACCH message 70 is detected as a badly decoded message by a CRC check in the coding/decoding section 42 even after the SACCH messages 68 and 70 have been combined. From the stealing flags of SACCH message 68, it is known that SACCH message 70 is a repeat of SACCH message 68. The MS 31 uses this information to treat the received SACCH messages 68 and 70 as one single message. Since both SACCH messages 68 and 70 are badly decoded, the MS 31 treats the repeated SACCH messages 68 and 70 as one SACCH message that is badly decoded. The MS 31 then updates the RLT counter 50 for one badly decoded SACCH message by decrementing the RLT counter 50 by 1.

SACCH message 72, with stealing flags SF set to '0', is received at the communication section 32 of MS 31 and an attempt is made to decode the SACCH message by coding/decoding section 42. In this case, SACCH message 72 is decoded correctly by coding/decoding section 42. From the SFs of SACCH message 72, the MS 31 identifies that the SACCH message 72 is going to be repeated in the succeeding SACCH message. The processor 30 is therefore instructed to wait until the succeeding SACCH message to update the RLT counter 50.

SACCH message 74, with stealing flags SF set to '1', is then received at the communication section 32 and an attempt is made to decode the SACCH message by coding/decoding section 42. In this case, SACCH message 74 is detected as a badly decoded message by a CRC check in the coding/decoding section 42. From the stealing flags of SACCH message 72, it is known that SACCH message 74 is a repeat of SACCH message 72. The MS 31 uses this information to treat the received SACCH messages 72 and 74 as one single message. Since SACCH message 72 has been decoded correctly, the MS 31 treats the repeated SACCH messages 72 and 74 as one decoded SACCH message. The MS 31 then updates the RLT counter 50 for one decoded SACCH message by incrementing the RLT counter 50 by 2.

Although not shown in FIG. 7, in the situation when repeating SACCH messages are both decoded correctly, the RLT counter 50 is incremented by 2.

The embodiment described with reference to FIG. 7, performs the CRC check after the coding/decoding section 42 has decoded the received message. Identifying whether the message is repeated or not is performed prior to the CRC check such that the MS 31 in accordance with the described embodiment of the invention can combine repeated messages in attempt to improve the chances of decoding correctly the received message prior to the CRC check. Combining messages to gain diversity is a technique well known in the art. It will be appreciated however that alternative techniques may also be used e.g. then the CRC check is performed prior to identifying whether a message is repeated or not. Furthermore, other methods for determining whether a received message has been decoded correctly or not may also be used instead of or in addition to a CRC check.

In an alternative embodiment, the stealing flag SF may be used to indicate that a preceding SACCH message is the same or different as the current SACCH message. For example, the stealing flag SF of the SACCH message 62 may be set to '0' to indicate that the preceding SACCH message 60 is the same as SACCH message 62. It is also possible to set for the two repeated SACCH messages the stealing flags SF to '0' to signal that they are repeated.

Irrespective of whether the identifier bit identifies whether the preceding or succeeding message is the same or different, the RLT counter 50 should not be updated until it has been determined whether there are repeated messages or not. If the identifier bit identifies that the preceding or succeeding messages are the same, the RLT counter is only updated once an attempt has been made to decode both messages and the messages have either been decoded successfully or badly decoded. If the identifier bit identifies that the preceding or succeeding messages are different, the RLT counter is updated as soon as the message has been successfully decoded or badly decoded. This ensures that repeated messages can be treated as one message. For example, in the case when both SACCH messages are badly decoded, the RLT counter 50 is only updated as if only one SACCH message is badly decoded. In the case when one SACCH message is decoded and the other repeated message is badly decoded (e.g. due to changes in radio conditions between SACCH message transmissions), the RLT counter 50 is only updated as if only one SACCH message is decoded (i.e. the fact that the same message is badlydecoded is ignored).

Since the RLT counter 50 is incremented by 2 in the case of a success when decoding and decremented by 1 in the case of failure when decoding, when the FER of SACCH messages is around 66%, there is a risk for the RLT counter to reach zero which results in radio link timeout and a dropped call. Thus, the type of bit used for the identifier bit must be robust enough to be reliable when the FER of SACCH message is around 66%.

It will be appreciated that updating the RLT counter 50 by +2 for a successful decode and -1 for an unsuccessful decode has been described for illustrative purposes only. The RLT counter 50 may be updated in any number of ways whilst still using the method for identifying repeating messages in accordance with the invention.

Referring now to FIG. 8 which shows simulation results for decoding performance from the carrier/interference C/I ratio for different FER for four different scenarios. Curve 82 represents the performance when two stealing flags SF (such as SFs 26 and 28 shown in FIG. 5) are used as the identifier bits. Curve 84 represents the performance when the spare bits (such as bits 18 shown in FIG. 4) are used as the identifier bits. Curve 86 represents the performance when no identifier bits are used but serial SACCH is activated. Curve 88 represents the performance when no identifier bits are used and serial SACCH is not activated.

From the simulation results shown in FIG. 8, it can be seen that 66% FER corresponds to C/I values of -18 to -20 dB in the case when serial SACCH is activated. In that range of C/I, the spare bits 18 have an error probability of more than 10%. In the same range of C/I, the stealing flags SF have an error probability of less the 5%. In this example, it can therefore be seen that the stealing flags are much more robust than the spare bits. This means that in this range of C/I, its much more likely that the RLT counter will not be managed correctly if spare bits are used compared to stealing flags. In other words, even when a SACCH message is badly decoded, due to the robustness of the stealing flags, the stealing flags are more likely to be properly decoded so the MS can determine whether the badly decoded SACCH message is a repeat or not and then update the RLT counter accordingly.

The present invention has been described above with respect to a downlink when the BS transmits serial SACCH messages to the MS. However, the present invention may also be applied to the uplink when the MS transmits serial SACCH messages to the BS of the BSS. Even though the BSS decides whether or not to activate serial SACCH, it is useful for the BSS to identify whether the MS sends a repeating SACCH message or not. For example, there is an unknown delay between when the BS sends the command to the MS to use serial SACCH and when the MS starts to use serial SACCH. Thus, the use of an identifier bit to notify the BSS when a repeated SACCH message has been received by the BS avoids any issues with the unknown delay. Furthermore, when using serial SACCH in an uplink, the MS could double the time for averaging the measurements to be reported to the BSS on the uplink since the measurement messages are repeated. In this case., the present invention allows the BSS to know when longer measurement reports are reported to the BSS by the MS by enabling the BSS to identify when measurement messages are repeated.

In summary, the present invention provides a method of identifying whether received messages are the same message or different messages using at least one identifier bit in the received message. Thus, the present invention can identify repeating messages very simply with no major design changes required in the wireless communication arrangement or to the signalling protocol.

In an embodiment, a stealing flag is used as the identifier bit which has an advantage in that the stealing flag has been shown to be reasonably robust and less likely to be badly decoded. This means that using stealing flags should result in less dropped calls compared to the case when serial SACCH is not activated and also in poor radio conditions when one or more of the spare bits are used as the identifier bit.

Typically in the coding/decoding section of a MS when using serial SACCH in the downlink, if the MS does not know if a SACCH message has been repeated and if the MS does not decode the SACCH message correctly according to the CRC check, the MS does a combination with the previous received SACCH message to gain diversity. Combining messages to gain diversity is well known in the art. The MS then tries again to decode the combined message. If the SACCH message has not been repeated, performing the combination does not help and has been carried out needlessly. Since the present invention enables the MS to know if the SACCH messages are repeated or not, the present invention allows for the MS to try combining messages only when necessary. Thus, the present invention can save MIPs of processing time compared to the typical MS.

## Claims

1. A method of identifying repeating messages received by a wireless communication arrangement, the method comprising:
receiving first and second messages at the wireless communication arrangement, wherein at least one of the first and second messages comprises at least one identifier bit having a first value or a second value for indicating whether the first and second messages are the same message or different messages; and
identifying whether the first and second messages are the same message or different messages in dependence on the value of the at least one identifier bit.

2. The method of claim 1, wherein the at least one of the first and second messages comprises at least four identifier bits for indicating whether the first and second messages are the same messages or different messages.

3. The method of claim 1, or 2, wherein the at least one identifier bit of the at least one of the first and second messages comprises a stealing flag.

4. The method of any preceding claim wherein the first and second messages are control messages.

5. The method of claim 6 wherein the control messages are SACCH messages.

6. The method of any preceding claim wherein the first message is received before the second message and wherein the first message comprises at least one identifier bit for indicating whether the second message is the same as the first message or different.

7. The method of any preceding claim wherein the wireless communication arrangement comprises a mobile device or a base station system.

8. A method of updating a radio link timeout counter in a wireless communication arrangement comprising:
receiving a first message and attempting to decode the first message;
receiving a second message and attempting to decode the second message, wherein at least one of the first and second messages comprises at least one identifier bit having a first value or a second value for indicating whether the first and second messages are the same message or different messages;
identifying whether the first and second messages are the same or different according to the method of any preceding claim; and
updating the radio link timeout counter in dependence on whether the first and second messages are determined to be decoded correctly or not and in dependence on whether the first and second messages are identified as the same or different.

9. The method of claim 8, wherein the at least one identifier bit of the at least one of the first and second messages comprises a stealing flag.

10. The method of claim 8 or 9 wherein the first and second messages are control messages.

11. The method of claim 10 wherein the control messages are SACCH messages.

12. A wireless communication arrangement adapted to perform the method of any preceding claim.

13. A wireless communication arrangement comprising:
communication means for receiving first and second messages, wherein at least one of the first and second messages comprises at least one identifier bit having a first value or a second value for indicating whether the first and second messages are the same message or different messages;
identification means for identifying whether the first and second messages are the same message or different messages in dependence on the value of the at least one identifier bit.

14. The wireless communication arrangement according to claim 13 wherein the identification means comprises a coding/decoding section for coding or decoding the received messages.

15. The wireless communication arrangement according to claim 14 further comprising a radio link timeout counter, the wireless communication arrangement being arranged to update the radio link timeout counter in dependence on whether the first and second messages are determined to be decoded correctly or not and in dependence on whether the first and second messages are identified as the same or different.

16. The wireless communication arrangement of claim 12, 13, 14 or 15, wherein the wireless communication arrangement comprises a mobile arrangement or a base station system.
